# EUROPÄISCHE PATENTSCHRIFT

(11) **EP 3 970 357 B1**
(45) Veröffentlichungstag und Bekanntmachung des Hinweises auf die Patenterteilung: **09.07.2025**
(21) Anmeldenummer: 20726744.4
(22) Anmeldetag: 13.05.2020
(51) Int. Cl.: B60R 11/04, B60R 1/00, H04N 23/50, H04N 23/66, E02F 9/26, E02F 9/08, E02F 3/40

(54) **KAMERASYSTEM UND ASSISTENZSYSTEM FÜR EIN FAHRZEUG**
CAMERA SYSTEM AND ASSISTANCE SYSTEM FOR A VEHICLE
SYSTÈME DE CAMÉRA ET SYSTÈME D'ASSISTANCE POUR VÉHICULE

(30) Priorität: 14.05.2019 DE 102019206925
(43) Veröffentlichungstag der Anmeldung: 23.03.2022
(73) Patentinhaber: Continental Automotive Technologies GmbH, 30175 Hannover (DE)
(72) Erfinder: SMITS, Thomas, 60488 Frankfurt am Main (DE)
(74) Vertreter: Continental Corporation
(86) Internationale Anmeldenummer: PCT/EP2020/063324
(87) Internationale Veröffentlichungsnummer: WO 2020/229534

(56) Entgegenhaltungen:
- CN-A- 108 583 460
- CN-A- 108 683 833
- DE-A1- 102017 208 592
- JP-A- 2011 035 964
- US-A1- 2015 172 518

## Beschreibung

Es wird ein Kamerasystem für ein Fahrzeug angegeben, insbesondere ein Kamerasystem für ein Assistenzsystem des Fahrzeugs. Weiterhin wird ein Assistenzsystem für ein Fahrzeug angegeben, das ein Kamerasystem aufweist.

Fahrzeuge können eine Kamera aufweisen und einen Monitor, der Bilder der Kamera für einen Nutzer des Fahrzeugs bereitstellt. Beispielsweise sind Spiegelersatzsysteme bekannt, bei denen mittels der Kamera und des Monitors die Sichtbereiche von herkömmlichen Außenspiegeln abgebildet werden. Es sind auch Rückfahrkameras bekannt, mittels derer Bereiche abbildbar sind, die mit herkömmlichen Spiegeln nicht einsehbar sind.

Aus DE 10 2017 208 592 A1 ist eine mobile Kameraeinheit für ein Rückfahrkamerasystem bekannt, wobei die Kameraeinheit eine drahtlose Funkschnittstelle, eine Videokamera, eine Befestigungseinrichtung und eine Energieversorgung mit einem Energiespeicher aufweist. Die Energieversorgung weist eine drahtlose Energieempfangseinheit auf, die dazu ausgebildet ist, mit einer Energieübertragungseinheit zusammenzuwirken.

Eine elektronische Kamera mit einer Ladestation offenbart JP 2011 035964 A, wobei die Ladestation einen Ladevorgang mit der Kamera kontaktlos durchführt.

Eine batteriebetriebene drahtlose Kamera für Sattelschlepper ist aus US 2015/172518 A1 bekannt. Eine abnehmbare Kameraeinheit kann wahlweise an einem Auflieger angebracht werden.

CN 108 583 460 A offenbart eine industrielle Kameraanordnung, die mehrere Kameras aufweist, welche jeweils mit Verbindungsmitteln an einem bogenförmigen Segment befestigt sind.

Eine Bilderfassungsausrüstung mit einer Kamera, einer fahrzeugmontierten Befestigungshalterung und einer Tragehalterung ist aus CN 108 683 833 A bekannt. Die Tragehalterung ist abnehmbar an der fahrzeugmontierten Befestigungshalterung angebracht.

Es ist wünschenswert, ein Kamerasystem für ein Fahrzeug anzugeben, das flexibel verwendbar ist. Es ist zudem wünschenswert, ein Assistenzsystem für ein Fahrzeug anzugeben, das flexibel einsetzbar ist.

Es wird ein Kamerasystem für ein Fahrzeug nach Anspruch 1 angegeben. Zudem wird ein Assistenzsystem nach Anspruch 8 angegeben, das ein solches Kamerasystem aufweist. Die beschriebenen Merkmale, Weiterbildungen und Vorteile des Kamerasystems gelten auch für das Assistenzsystem und umgekehrt.

Das Kamerasystem weist eine Haltevorrichtung auf. Die Haltevorrichtung ist außen an dem Fahrzeug abnehmbar befestigbar. Die Haltevorrichtung weist einen Akkumulator auf. Das Kamerasystem weist eine Kamera auf. Die Kamera ist an der Haltevorrichtung abnehmbar befestigbar. Elektrische Energie von dem Akkumulator ist zu der Kamera übertragbar zum Betreiben der Kamera.

Das Fahrzeug ist beispielsweise ein Kraftfahrzeug wie ein Pkw, ein Lkw oder ein Baustellenfahrzeug, wie ein Bagger. Das Fahrzeug ist beispielsweise ein Anhänger für ein Kraftfahrzeug.

Die Haltevorrichtung ist an dem Fahrzeug befestigbar, beispielsweise mittels eines Magneten. Die Haltevorrichtung ist so befestigbar, dass sie zerstörungsfrei an dem Fahrzeug befestigt werden kann und wieder entfernt werden kann. Die Haltevorrichtung ist an einer einem Innenraum des Fahrzeugs abgewandten Außenseite des Fahrzeugs befestigbar. Die Haltevorrichtung ist außen am Fahrzeug befestigbar, sodass die Haltevorrichtung im Betrieb in Kontakt zur Umwelt ist. Die Haltevorrichtung ist somit mit unterschiedlichen Fahrzeugen koppelbar. Die Haltevorrichtung ist mit unterschiedlichen Kameras koppelbar. Somit ist ein modulares System gebildet, dass flexibel je nach gewünschtem Einsatz verwendbar ist. Es ist möglich, die Haltevorrichtung nur temporär an dem Fahrzeug zu befestigen, wenn ein Einsatz gewünscht ist.

Die Haltevorrichtung ist ausgebildet, die Kamera aufzunehmen und zu halten. Somit ist die Kamera mittels der Haltevorrichtung an dem Fahrzeug befestigbar. Beispielsweise ist die Kamera mittels Magneten an der Haltevorrichtung befestigbar. Die Kamera ist zerstörungsfrei aus der Haltevorrichtung wieder entnehmbar. Somit ist es beispielsweise möglich, die Kamera an einer Mehrzahl von Fahrzeugen zu verwenden, die jeweils eine eigene Haltevorrichtung aufweisen. Zudem ist es möglich, die Haltevorrichtung an verschiedenen Fahrzeugen anzubringen. Beispielsweise ist es möglich, die Haltevorrichtung zeitlich nur während des Betriebs des Fahrzeugs an dem Fahrzeug anzubringen und ansonsten von dem Fahrzeug zu entfernen, beispielsweise wenn das Fahrzeug geparkt wird.

Die Kamera ist beispielsweise ausgebildet, wie in der DE 10 2017 208 592 oder der DE 10 2018 218 735 beschrieben.

Die Haltevorrichtung ist flexibel einsetzbar und insbesondere nicht auf einen speziellen Anwendungszweck beschränkt. Dies wird beispielsweise dadurch erreicht, dass die Haltevorrichtung den Akkumulator aufweist. Alternativ oder zusätzlich wird dies dadurch erreicht, dass die Haltevorrichtung außen an dem Fahrzeug abnehmbar befestigbar ist. Somit ist es möglich, die Haltevorrichtung an unterschiedlichen Stellen des Fahrzeugs zeitweise anzubringen. Insbesondere ist die Haltevorrichtung auch an Positionen anbringbar, an denen keine direkte Stromversorgung möglich ist. Der Akkumulator der Haltevorrichtung ermöglicht so einen Betrieb der Kamera auch über längere Zeiträume hinweg. Die Anwendungsmöglichkeiten des Kamerasystems sind somit im Vergleich zu herkömmlichen Kameraanwendungen im Fahrzeugbereich vergrößert. Hierbei ist es insbesondere möglich, auf eine feste Installation mit dauerhafter Stromversorgung zu verzichten.

Die Kamera ist beispielsweise ausgebildet, ihr Videosignal an ein Assistenzsystem des Fahrzeugs zu senden, insbesondere mittels einer Funkverbindung. Die Bilder der Kamera werden beispielsweise zusammen mit Bildern von weiteren Kameras gemeinsam auf einem oder mehreren Monitoren im Fahrzeug dargestellt. Die Betriebsdauer der Kamera wird aufgrund des Akkumulators in der Haltevorrichtung verlängert, ohne dass ein zwischenzeitliches Laden notwendig ist. Beispielsweise ist es auch möglich, die Haltevorrichtung bei entladenem Akkumulator durch eine weitere Haltevorrichtung mit geladenem Akkumulator auszutauschen, sodass auch ein Betrieb während des Ladens des Akkumulators der Haltevorrichtung möglich ist.

Gemäß zumindest einer Ausführungsform weist die Haltevorrichtung eine Energiesendevorrichtung auf. Die Energiesendevorrichtung ist mit dem Akkumulator elektrisch gekoppelt. Die Kamera weist eine Energieempfangsvorrichtung auf. Die elektrische Energie von der Energiesendevorrichtung ist drahtlos zu der Energieempfangsvorrichtung übertragbar. Die Energiesendevorrichtung und die Energieempfangsvorrichtung weisen beispielsweise jeweils eine Spule auf. Elektrische Energie ist von der Energiesendevorrichtung zu der Energieempfangsvorrichtung drahtlos übertragbar zum Betreiben der Kamera. Somit ist es gemäß Ausführungsbeispielen möglich, die Kamera während des Betriebs im befestigten Zustand in der Haltevorrichtung mit elektrischer Energie zu versorgen. Hierzu muss insbesondere keine Verkabelung zwischen der Haltevorrichtung und der Kamera vorgesehen werden.

Die Kamera und die Haltevorrichtung sind im betriebsbereiten Zustand beabstandet voneinander anordenbar. Das Kamerasystem weist eine Kabelverbindung zwischen der Kamera und der Haltevorrichtung auf zum Übertragen der elektrischen Energie. Somit ist es beispielsweise möglich, die Kamera an einer ersten Position zu befestigen, die vorrangig aufgrund des Aufnahmebereichs der Kamera gewählt ist.

Die Haltevorrichtung ist beabstandet dazu an einer zweiten Position befestigbar. Die zweite Position ist insbesondere unterschiedlich zur ersten Position. Die zweite Position wird beispielsweise vorrangig so gewählt, dass ein verlässliches Halten der Haltevorrichtung möglich ist. Dies kann beispielsweise in einem geschützten Ort des Kraftfahrzeugs sein und/oder an einer Position, die im Betrieb wenig Umwelteinflüssen ausgesetzt ist. Der Abstand zwischen der Haltevorrichtung und der Kamera wird mittels der Kabelverbindung überbrückt. Somit ist es trotz des Abstands möglich, dass die Kamera mit der elektrischen Energie des Akkumulators der Haltevorrichtung betrieben wird.

Das Kamerasystem weist eine weitere Haltevorrichtung auf. Die weitere Haltevorrichtung ist fest an dem Fahrzeug befestigbar. Die weitere Haltevorrichtung ist mit der Haltevorrichtung koppelbar. Alternativ oder zusätzlich ist die weitere Haltevorrichtung mit der Kamera koppelbar. Die weitere Haltevorrichtung ist beispielsweise mittels Schrauben oder anderem Befestigungsmittel an dem Fahrzeug befestigbar. Die weitere Haltevorrichtung ist insbesondere so befestigbar, dass sie zerstörungsfrei nicht ohne Weiteres wieder von dem Fahrzeug entfernt werden kann.

Die weitere Haltevorrichtung ist an der ersten Position befestigt, wenn die Haltevorrichtung und die Kamera beabstandet voneinander angeordnet sind. Die Kamera ist dann mittels der weiteren Haltevorrichtung an dem Fahrzeug befestigt. Beabstandet dazu ist die Haltevorrichtung angeordnet, die zur Versorgung mit elektrischer Energie dient.

Es ist auch möglich, die Haltevorrichtung mittels der weiteren Haltevorrichtung an dem Fahrzeug zu befestigen. Die Kamera wird dann beispielsweise an der Haltevorrichtung befestigt. Es lassen sich unterschiedliche Stapelvarianten bilden, je nach gewünschtem und benötigtem Anwendungsfall.

Gemäß zumindest einer Ausführungsform weist die Kamera einen weiteren Akkumulator auf. Der weitere Akkumulator der Kamera ist mittels der Haltevorrichtung ladbar. Dies ermöglicht eine Verlängerung der Betriebszeit der Kamera.

Gemäß zumindest einer Ausführungsform ist die Kamera ausgebildet, in einem befestigten Zustand der Kamera an der Haltevorrichtung mittels drahtloser Nahfeldkommunikation von der Haltevorrichtung Positionsdaten zu empfangen. Dies ermöglicht ein Bestimmen einer relativen Position der Haltevorrichtung zum Fahrzeug. Beispielsweise werden die Positionsdaten mittels RFID, NFC, Bluetooth oder anderen Nahfeldkommunikationsstandards übertragen. Die Positionsdaten sind beispielsweise in einem Speicher der Haltevorrichtung gespeichert. Beispielsweise erfolgt das Ermitteln und Senden der Positionsdaten wie in der DE 10 2018 218 735 beschrieben.

Beispielsweise ist die Kamera ausgebildet, ihr Videosignal zusammen mit den Positionsdaten zur Weiterverarbeitung an das Assistenzsystem des Fahrzeugs zu senden. Somit ist es einfach und zuverlässig möglich, das Bild der Kamera mit Bildern weiterer Kameras des Fahrzeugs zu kombinieren und beispielsweise gemeinsam anzuzeigen. Das Zusammenfügen der Bilder der unterschiedlichen Kameras ist in Abhängigkeit der genauen Kenntnis der Position der Kameras einfach und zuverlässig möglich. Somit ist ein Einbinden der mobilen Kamera und der mobilen Haltevorrichtung in das Assistenzsystem des Fahrzeugs möglich.

Gemäß zumindest einer Ausführungsform weist das Kamerasystem eine Mehrzahl von Haltevorrichtungen auf, die aneinander abnehmbar befestigbar sind. Die Haltevorrichtungen sind ausgebildet, sich gegenseitig mit elektrischer Energie zu versorgen. Somit ist es möglich, die Betriebszeit der Kamera weiter zu erhöhen.

Gemäß zumindest einer Ausführungsform weist die Haltevorrichtung einen Signalverstärker zur Vergrößerung der Reichweite eines Funkvideosignals der Kamera auf. Der Signalverstärker ist ausgebildet zur Vergrößerung der Reichweite des Funkvideosignals der Kamera. Die Kamera ist beispielsweise ausgebildet, mittels eines WLAN-Standards oder einer anderen Funkverbindung ihr Videosignal zu einem Empfangsgerät des Fahrzeugs zu übertragen. Mittels des Signalverstärkers der Haltevorrichtung ist das Funkvideosignal der Kamera verstärkbar und somit die Reichweite verbesserbar. Insbesondere wenn die Haltevorrichtung an einer Rückseite eines metallischen Anhängers montiert ist, ist so trotzdem eine ausreichend stabile Übertragung des Funkvideosignals möglich.

Gemäß zumindest einer Ausführungsform weist ein Assistenzsystem für ein Fahrzeug ein Kamerasystem gemäß zumindest einer Ausführungsform auf. Das Assistenzsystem weist mindestens eine weitere Kamera auf. Das Assistenzsystem weist einen Monitor auf. Bilder der Kamera und der weiteren Kamera sind kombiniert auf dem Monitor darstellbar. Somit ist es möglich, das Bild der mobilen Kamera kombiniert mit dem Bild der weiteren Kamera darzustellen. Hierfür sind insbesondere die Position der Kamera des Kamerasystems und die Position der weiteren Kamera relativ zueinander bekannt.

Weitere Vorteile, Merkmale und Weiterbildungen ergeben sich aus den nachfolgenden, in Verbindung mit den Figuren erläuterten Beispielen. Gleiche, gleichartige und gleich wirkende Elemente können darin mit den gleichen Bezugszeichen versehen sein.

Es zeigen:
Figur 1 eine schematische Darstellung eines Assistenzsystems gemäß einem Ausführungsbeispiel,
Figuren 2 bis 5 jeweils eine schematische Darstellung eines Kamerasystems gemäß verschiedenen Ausführungsbeispielen,
Figuren 6 und 7 jeweils eine schematische Darstellung eines Kamerasystems im betriebsfertigen Zustand gemäß Ausführungsbeispielen.

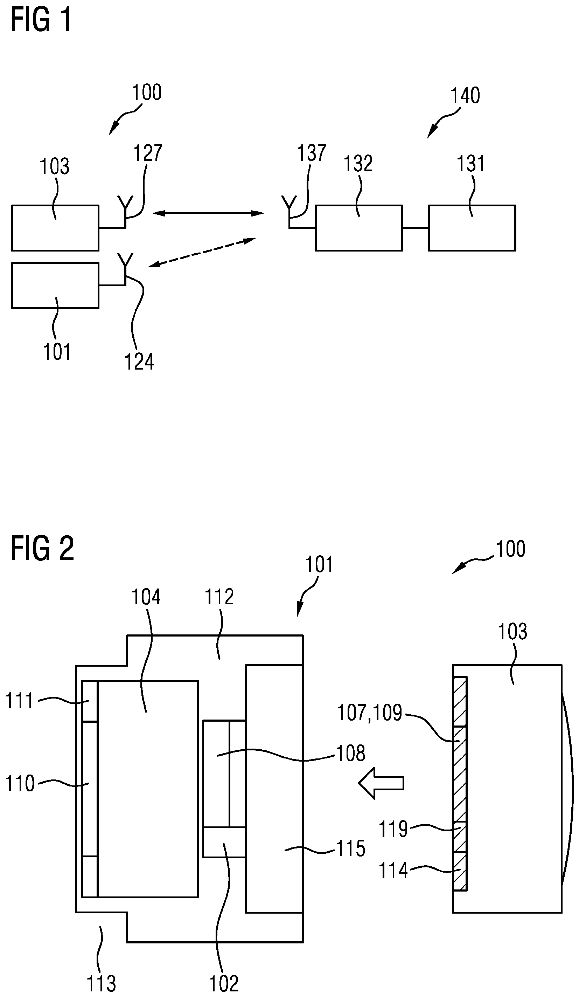

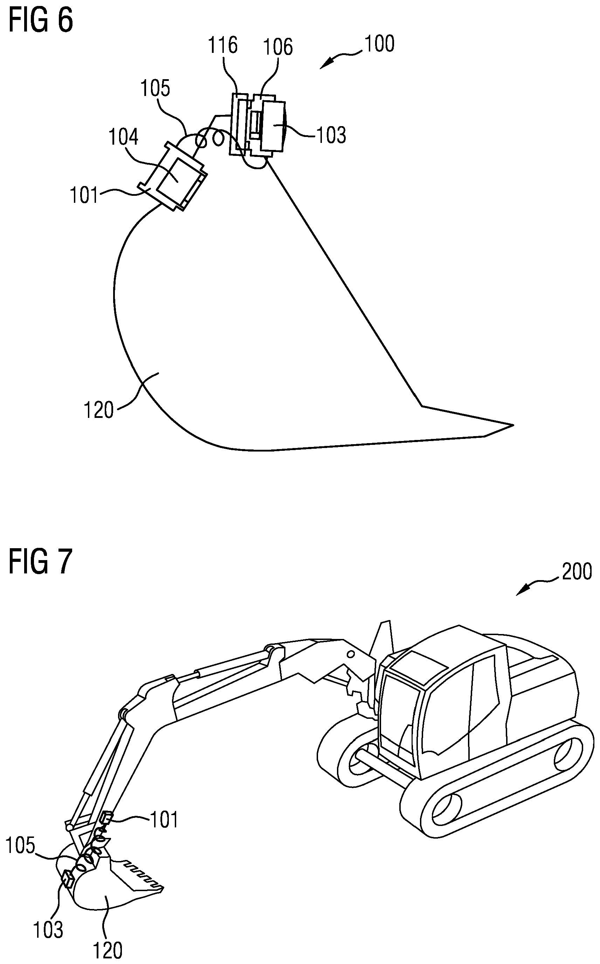

Figur 1 zeigt eine schematische Darstellung eines Assistenzsystems 140 für ein Fahrzeug 200 (Figur 7). Das Assistenzsystem 140 ist beispielsweise Teil eines Spiegelersatzsystems und/oder Teil eines Rückfahrassistenzsystems für einen Nutzer des Fahrzeugs. Das Assistenzsystem 140 ist beispielsweise Teil eines andersartigen Kameramonitorsystems für das Fahrzeug 200.

Das Assistenzsystem 140 weist ein Kamerasystem 100 auf. Das Kamerasystem 100 weist eine Kamera 103 auf. Das Kamerasystem weist eine Haltevorrichtung 101 auf. Die Haltevorrichtung 101 ist an dem Fahrzeug 200 befestigbar. Die Kamera 103 ist reversibel an der Haltevorrichtung 101 befestigbar. Beispielsweise weist das Kamerasystem einen unbefestigten Zustand auf, in dem die Haltevorrichtung 101 nicht an dem Fahrzeug 200 befestigt ist. In einem befestigten Zustand ist die Haltevorrichtung 101 an dem Fahrzeug 200 befestigt und die Kamera 103 ist von der Haltevorrichtung 101 gehalten und insbesondere nicht oder nur unwesentlich relativ zu der Haltevorrichtung 101 bewegbar.

Das Assistenzsystem 140 weist eine Empfangsvorrichtung 132 und einen Monitor 131 auf. Weitere Elemente wie Steuervorrichtungen und Bildverarbeitungsvorrichtungen können vorgesehen sein. Der Monitor 131 ist insbesondere im Innenraum des Fahrzeugs 200 und beispielsweise im Blickfeld eines Nutzers des Fahrzeugs 200 angeordnet. Der Monitor 131 dient zum Darstellen von Bildern beziehungsweise Videos der Kamera 103.

Die Bildsignale der Kamera 103 werden im Betrieb drahtlos mittels einer Funktechnik zwischen dem Kamerasystem 100 und der Empfangseinheit 132 übertragen. Die Kamera 103 weist hierzu eine Antenne 127 auf. Die Empfangsvorrichtung 132 weist korrespondierend die Antenne 137 auf. Optional weist auch die Haltevorrichtung 101 eine Antenne 124 auf. Die Antenne 124 ist beispielsweise Teil eines Signalverstärkers, der gemäß Ausführungsbeispielen in der Haltevorrichtung 101 vorgesehen ist.

Gemäß Ausführungsbeispielen weist die Haltvorrichtung 101 keine eigene Antenne auf. Nur die Kamera 103 weist die Antenne 127 auf. Eine Funkverbindung zum Übertragen der Bilddaten wird nur zwischen der Kamera 103 und der Empfangsvorrichtung 132 ausgebildet.

Die Kamera 103 ist eine Funkkamera zur Sichtfelderweiterung im Fahrzeug 200. Die Kamera 103 ist mobil und flexibel verwendbar und beispielsweise mit einer Mehrzahl von unterschiedlichen Haltevorrichtungen 101 unterschiedlichen Fahrzeugen koppelbar. Die Kamera 103 selbst muss dazu nicht direkt mit dem Fahrzeug verbunden werden und beispielsweise nicht mit dem Fahrzeug verschraubt werden. Die Kamera 103 wird reversibel mittels der Haltevorrichtung 101 an dem Fahrzeug befestigt. Die Haltevorrichtung 101 wird reversibel an dem Fahrzeug befestigt. Somit ist ein temporäres Anbringen der Kamera 103 an dem Fahrzeug mittels der Haltevorrichtung 101 ermöglicht. Somit ist es möglich, die Kamera 103 auch dann zu verwenden, wenn feste Installationen unerwünscht sind.

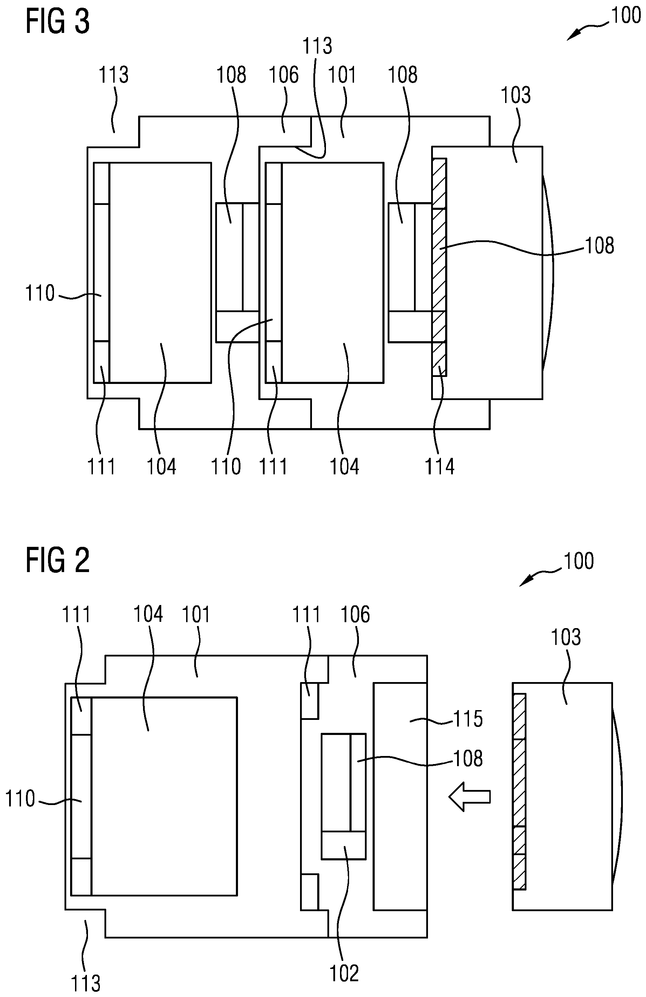

Figur 2 zeigt das Kamerasystem 100 gemäß einem Ausführungsbeispiel.

Die Kamera 103 weist einen Akkumulator 107 auf. Dieser dient im Betrieb insbesondere dazu, die Kamera 103 mit elektrischer Energie zu versorgen. Gemäß weiteren Ausführungsbeispielen weist die Kamera 103 keinen eigenen Akkumulator auf. Die Kamera 103 weist eine Energieempfangsvorrichtung 109 auf. Die Energieempfangsvorrichtung weist beispielsweise eine Spule auf. Die Energieempfangsvorrichtung 109 dient zur induktiven Energieversorgung der Kamera 103. Die Kamera 103 weist einen Magneten 114 auf. Mittels des Magneten 114 ist die Kamera an der Haltevorrichtung 101 befestigbar. Der Magnet 114 wird gemäß Ausführungsbeispielen alternativ oder zusätzlich dazu verwendet, die Kamera 103 unmittelbar an dem Fahrzeug 200 zu befestigen. Die Kamera 103 weist eine Kommunikationsschnittstelle 119 auf. Die Kommunikationsschnittstelle 119 dient zum Austausch von Informationen mit der Haltevorrichtung 101. Die Kommunikationsschnittstelle 119 ermöglicht insbesondere eine drahtlose Kommunikation. Beispielsweise ermöglicht die Kommunikationsschnittstelle 119 eine Nahfeldkommunikation mittels NFC, Bluetooth oder anderen Kommunikationsstandards.

Die Haltevorrichtung 101 weist einen Akkumulator 104 auf. Der Akkumulator 104 dient zum Speichern elektrischer Energie. Die Haltevorrichtung 101 weist eine Energiesendevorrichtung 108 auf. Die Energiesendevorrichtung 108 weist beispielsweise eine Spule auf. Die Energiesendevorrichtung 108 dient gemeinsam mit der Energieempfangsvorrichtung 109 der Kamera 103 zur induktiven Übertragung von elektrischer Energie von der Haltevorrichtung 101 zur Kamera 103. Die Energiesendevorrichtung 108 der Haltevorrichtung 101 ist mit dem Akkumulator 104 elektrisch verbunden. Insbesondere sind die Energiesendevorrichtung 108 und der Akkumulator 104 in einem gemeinsamen Gehäuse 112 der Haltevorrichtung 101 angeordnet.

Die Haltevorrichtung 101 weist eine Energieempfangsvorrichtung 110 auf. Die Energieempfangsvorrichtung 110 der Haltevorrichtung 101 dient zum induktiven Empfangen von elektrischer Energie. Mittels der Energieempfangsvorrichtung 110 der Haltevorrichtung 101 ist es somit möglich, den Akkumulator 104 der Haltevorrichtung 101 induktiv zu laden. Die Energieempfangsvorrichtung 110 der Haltevorrichtung 101 ist elektrisch mit dem Akkumulator 104 verbunden.

Die Haltevorrichtung 101 weist einen Magnet 111 auf. Der Magnet 111 dient zum Befestigen der Haltevorrichtung 101 an einem Untergrund. Beispielsweise ist es möglich, die Haltevorrichtung 101 mittels des Magneten 114 unmittelbar an dem Fahrzeug 200 zu befestigen. Es ist auch möglich, die Haltevorrichtung 101 mittels des Magneten 114 an einer weiteren Haltevorrichtung 101, 106 (Figur 3) zu befestigen.

Das Gehäuse 112 der Haltevorrichtung 101 weist eine Aufnahme 115 auf. Die Aufnahme 115 dient zur Aufnahme der Kamera 103. Die Aufnahme 115 dient auch dazu, eine weitere Haltevorrichtung 101, 106 aufzunehmen.

Das Gehäuse 112 weist an einer der Aufnahme 115 gegenüberliegenden Seite eine Aussparung 113 auf. Die Aussparung 113 ist korrespondierend zur Aufnahme 115 ausgebildet, sodass ein Stapel von Haltevorrichtungen 101, 106 gebildet werden kann.

Die Haltevorrichtung 101 weist eine Kommunikationsschnittstelle 102 auf. Die Kommunikationsschnittstelle 102 ist ausgebildet zur drahtlosen Kommunikation mit der Kommunikationsschnittstelle 119 der Kamera 103. Mittels den Kommunikationsschnittstellen 102, 119 ist beispielsweise ein Austausch von Positionsinformationen und/oder Steuerinformationen möglich. Die Positionsinformationen umfassen insbesondere Informationen darüber, an welcher Position die Haltevorrichtung 101 und damit die Kamera 103 relativ zum Fahrzeug 200 befestigt ist.

Die reversible Befestigung der Haltevorrichtung 101 mittels Magneten 111 sowie die Energiespeicherung im Akkumulator 104 der Haltevorrichtung 101 ermöglicht einen mobilen Einsatz unabhängig von speziellen Anwendungszwecken. Der Akkumulator 104 ermöglicht eine ausreichend lange Betriebszeit für die Kamera 103. Es ist ausreichend Bauraum in der Haltevorrichtung 101 vorhanden, um einen ausreichend großen Akkumulator 104 zu verwenden. Die Kamera 103 kann somit ausreichend lange betrieben werden, ohne dass die Kamera 103 hierfür mit einem großen Akkumulator 104 versehen werden muss. Die Betriebszeit der Kamera 103 ist somit ausreichend groß, um die Anwendungsmöglichkeiten des Kamerasystems 100 zu vergrößern, ohne dass dazu eine feste Installation mit dauerhafter Stromversorgung benötigt wird. Die mobile Haltevorrichtung 101 bietet weiterhin die Möglichkeit der mobilen Nutzung mit einer Betriebsdauer, die deutlich länger ist als mittels des Akkumulators 107 der Kamera 103 allein.

Die Haltevorrichtung 101, die die drahtlose induktive Versorgung mit elektrischer Energie der Kamera 103 ermöglicht, ist zusätzlich mit dem Akkumulator 104 ausgestattet. Im Ausführungsbeispiel der Figur 2 sind die Komponenten der Haltevorrichtung 101 in einem einzigen gemeinsamen geschlossenen Gehäuse 112 untergebracht. Die Form des Gehäuses ist lediglich exemplarisch dargestellt. Eine runde oder zylindrische Form ist gemäß Ausführungsformen besonders nutzbringend. Die runde oder zylindrische Form ermöglich beispielsweise eine gute Passgenauigkeit und somit ein verlässliches induktives Laden.

Es kann auch eine andere Form vorgesehen sein. Beispielsweise ist es möglich, durch eine Vergrößerung der Fläche im Verhältnis zur Höhe eine bessere Haftung am Untergrund zu realisieren. Beispielsweise ist es dadurch möglich, ein geringeres Kippmoment zu realisieren. Alternativ oder zusätzlich ist es beispielsweise so möglich eine größere Anzahl an Magneten 111 unterbringen zu können.

Figur 3 zeigt das Kamerasystem 100, bei dem mehrere Haltevorrichtungen 101, 106 gestapelt sind. In die Aufnahme 115 der äußersten Haltevorrichtung 101 ist die Kamera 103 eingebracht. Die Haltevorrichtungen 101, 106 sind mittels den jeweiligen Energiesendevorrichtungen 108 und Energieempfangsvorrichtungen 110 der Haltevorrichtungen 101, 106 elektrisch miteinander gekoppelt. Somit ist es möglich die Kapazität der einzelnen Akkumulatoren 104 der Haltevorrichtungen 101, 106 gemeinsam zu nutzen, um die Betriebszeit für die Kamera 103 weiter zu erhöhen. Selbstverständlich ist es möglich, auch mehr als zwei Haltevorrichtung 101, 106 zu stapeln. Aufgrund der Form des Gehäuses 112 mit der Aufnahme 115 und der Aussparung 113 ist ein modulares Kamerasystem 100 realisiert. Die Komponenten des Kamerasystems 100 können beliebig miteinander kombiniert und wiederverwendet werden.

Beispielsweise ist es möglich, die Kamera 103 in eine Ladeschale mit externer Stromversorgung einzulegen. Die Kamera 103 kann alternativ in die

Haltevorrichtung 101 mit dem Akkumulator 104 eingelegt werden. Die Haltevorrichtung 101 kann wiederum selbst in eine Ladeschale gelegt werden, die an eine externe Stromversorgung angeschlossen ist. Alternativ ist es möglich die Haltevorrichtung 101 mit der weiteren Haltevorrichtung 106 zu koppeln.

Die Haltevorrichtungen 101, 106 können somit jeweils selbst geladen werden und/oder einen anderen Verbraucher mit elektrischer Energie versorgen, beispielsweise die Kamera 103 oder eine weitere Haltevorrichtung 101, 106. Als beispielhafte Kombinationen ist es somit möglich eine Ladeschale vorzusehen, die an das Stromnetz des Fahrzeugs 200 direkt angeschlossen ist. Diese wird zum Laden des Akkumulators 107 der Kamera 103 verwendet.

Eine weitere Kombination besteht aus der Haltevorrichtung 101 und der Kamera 103.

Eine weitere Kombination weist die Ladeschale auf, die direkt an ein externes Stromnetz angeschlossen ist, und die Haltevorrichtung 101. In einer weiteren Kombination wird die Ladeschale verwendet, um die Haltevorrichtung 101 mit elektrischer Energie zu versorgen. Die Kamera 103 ist mit der Haltevorrichtung 101 verbunden.

In einer weiteren Kombination sind die beiden Haltevorrichtungen 101, 106 miteinander verbunden, um die Kapazität der jeweiligen Akkumulatoren 104 gemeinsam nutzen zu können. Es können beliebig viele Haltevorrichtungen 101, 106 miteinander kombiniert werden und beispielsweise am Ende die Kamera 103 die Kapazität sämtlicher Akkumulatoren 104 nutzen. Ein Stapel aus beliebig vielen Haltevorrichtungen 101, 106 ist mit der Ladeschale kombinierbar und auch mit der Kamera 103. Viele andere Kombinationen sind je nach Einsatzort und gewünschter Verwendung des Kamerasystems 100 möglich.

Figur 4 zeigt das Kamerasystem 100 gemäß einem weiteren Ausführungsbeispiel. Die Haltevorrichtung 101 weist den Akkumulator 104 auf. Auf die weiteren Elemente, insbesondere die Energiesendevorrichtung 108 und die Kommunikationsschnittstelle 102 ist verzichtet. Es sind die Magneten 111 vorgesehen und beispielsweise die Empfangsvorrichtung 110 der Haltevorrichtung 101. Somit kann die Haltevorrichtung 101 an dem Fahrzeug 200 befestigt werden und mit elektrischer Energie zum Laden des Akkumulators 104 versorgt werden.

Die Kommunikationsschnittstelle 102 und die Energiesendevorrichtung 108 sind in die weitere Haltevorrichtung 106 integriert. In die weitere Haltevorrichtung 106 wird beispielsweise die Kamera 103 im Betrieb eingesetzt.

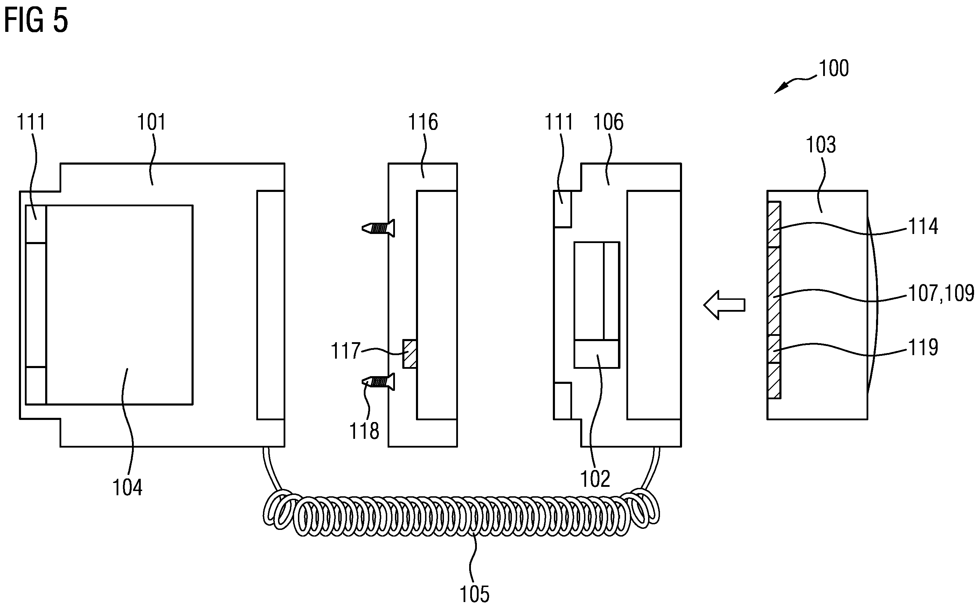

Die Haltevorrichtung 101 und die weitere Haltevorrichtung 106 sind beispielsweise mit einer Kabelverbindung 105 (Figur 5) miteinander verbunden. Die Kabelverbindung 105 dient zum Übertragen elektrischer Energie von dem Akkumulator 104 der Haltevorrichtung 101 zu der Energiesendevorrichtung 108 der weiteren Haltevorrichtung 106.

Beispielsweise ist es möglich, dass das Kabel der Kabelverbindung 105 dem Gehäuse 112 der Haltevorrichtung 101 aufgenommen werden kann, beispielsweise von einem Mechanismus aufgewickelt werden kann. Alternativ ist es möglich, ein Spiralkabel zu verwenden.

Die Kabelverbindung 105 ermöglicht einen flexiblen Einsatz der Haltevorrichtung 101 und der weiteren Haltevorrichtung 106 auch beabstandet zueinander. Es ist möglich, die Haltevorrichtung 101 und die weitere Haltevorrichtung 106 beabstandet voneinander in kurzer Entfernung zu positionieren, beispielsweise in einem Abstand von ein bis zwei Meter.

Die weitere Haltevorrichtung 106 zum Halten der Kamera 103 wird beispielsweise direkt an dem Fahrzeug 200 befestigt. Alternativ ist es möglich, eine Halterung 116 zu verwenden, die fest mit dem Fahrzeug 200 verbunden ist, wie exemplarisch in Figur 5 dargestellt. Beispielsweise ist die Halterung 116 ausgebildet wie in der DE 10 2018 218 735 beschrieben.

Die Halterung 116 ist mittels einer Befestigung 118, beispielsweise Schrauben, an dem Fahrzeug fest installiert. Mittels der Magnete 111 ist die weitere Haltevorrichtung 106 in der Halterung 116 befestigbar. Die Halterung 116 weist eine Kommunikationsschnittstelle 117 auf. Die Kommunikationsschnittstelle 117 weist beispielsweise einen Speicher auf, in dem Positionsdaten der fest installierten Halterung 116 gespeichert sind. Mittels drahtloser Kommunikation zwischen der Kommunikationsschnittstelle 117 der Halterung 116 und der Kommunikationsschnittstelle 102 der weitere Haltevorrichtung 106 sowie der Kommunikationsschnittstelle 119 der Kamera 103 ist es möglich, die Positionsdaten und Informationen zwischen den einzelnen Elementen zu übertragen.

Die Kommunikationsschnittstelle 117 der Halterung 116 weist beispielsweise einen Tag auf, der über Kurzstreckenfunk von der weiteren Haltevorrichtung 106 oder der Kamera 103 ausgelesen und/oder beschrieben werden kann, insbesondere einen RFID-Tag. Mittels des Tags ist die Halterung 116 eindeutig identifizierbar und mit der Position und ihrem Anbauort assoziierbar. Dies vereinfacht ein Einbinden der Bilder der Kamera 103 in eine gemeinsame Darstellung von mehreren Bildern unterschiedlicher Kameras beispielsweise mittels Stitching.

Figuren 6 und 7 zeigen jeweils das Kamerasystem 100 mit der Kabelverbindung 105 in beispielhaften Verwendungen. Das Kamerasystem 100 ist an einem Baggerlöffel 120 angebracht. Die Halterung 116 ist an einer Position angebracht, sodass relevante Sichtbereiche von der Kamera 103 abgebildet werden können. Die Haltevorrichtung 101 mit dem Akkumulator 104 ist an einer Position angebracht, die beabstandet von der Halterung 116 ist. Die Position der Haltevorrichtung 101 wird beispielsweise so gewählt, dass die Haltevorrichtung 101 den Betrieb möglichst wenig stört und sicher mit dem Baggerlöffel 120 des Fahrzeugs 200 verbunden bleibt.

Die Position der Halterung 116 ist beispielsweise bei der Montage vorgegeben oder bestimmt und in einem Speicher der Kommunikationsschnittstelle 117 der Halterung 116 gespeichert. Somit ist es möglich, dass die Kamera 106 automatisch im Betrieb erkennt und identifiziert, an welcher Stelle und mit welchem Teil des Fahrzeugs 200 (hier beispielhaft der Baggerlöffel 120) sie angeordnet ist. Insbesondere bei einem Bagger, der unterschiedliche Werkzeuge verwendet, ist so eine Identifizierung des Werkzeugs mittels der Halterung 116 möglich. Die definierte Position der Kamera 103 ist im Betrieb ebenfalls bekannt. Somit ist ein einfaches Stitching der Bilder der Kamera 103 mit Bildern von weiteren Kameras möglich. Auf die weitere Haltervorrichtung 106 wird gemäß Ausführungsbeispiel verzichtet und die Kamera 103 direkt in die Halterung 116 eingesetzt.

Gemäß weiteren Ausführungsbeispielen wird die Kamera 103 nicht direkt in die Halterung 116 eingesetzt, sondern in die weitere Haltevorrichtung 106. Die weitere Haltevorrichtung 106 wird wiederum an der Halterung 116 befestigt. Die Haltevorrichtung 101 mit dem Akkumulator 104 kann daher unabhängig von einer vorgegebenen Position für die Kamera 103 besonders stabil an einer geeigneten Stelle platziert werden. Beispielsweise weist die Position für die Haltevorrichtung 101 eine massive Metallfläche und/oder eine hohe Stärke des Metalls auf, sodass eine stabile Befestigung mittels des Magneten 111 möglich ist. Die Betriebszeit für die Kamera 103 wird somit erhöht. Dabei bleibt ein komfortables Stitching möglich, ohne dass eine feste Verkabelung für die Kamera 103 benötigt wird. Außerdem ist keine Steckverbindung oder Kabelverbindung zum Übertragen der elektrischen Energie zwischen dem Werkzeug, beispielsweise dem Baggerlöffel 120 und dem Hauptfahrzeug 200 notwendig. Somit ist das Kamerasystem 100 auch gut nachrüstbar.

Gemäß einem weiteren Ausführungsbeispiel wird auf die Halterung 116 verzichtet. Die Kamera 103 wird mit der weiteren Haltevorrichtung 106 direkt an dem Fahrzeug 200 beziehungsweise dem Werkzeug (hier beispielsweise dem Baggerlöffel 120) platziert und befestigt. Somit ist eine Befestigung der Kamera 103 an einer Position möglich, an der die Kamerasicht gerade benötigt wird. Dabei bleibt die Haltevorrichtung 101 an einer mechanisch möglichst geeigneten Position befestigbar beabstandet zur weiteren Haltevorrichtung 106.

Auch ohne die fest installierte Halterung 116 ist die Verwendung der Kamera 106 in dem Kamerasystem 100 um insbesondere dem Assistenzsystem 140 gut möglich. Insbesondere für vergleichsweise einfache Sichtanwendungen, in denen beispielsweise nur das Bild der Kamera 103 dargestellt wird, ist eine exakte Positionsinformation nicht notwendig. Insbesondere erlaubt das Kamerasystem 100 ohne die Halterung 116 eine Verwendung mit jedem beliebigen Werkzeug, insbesondere auch mit Werkzeugen, die nicht mit einer Halterung 116 ausgestattet sind und auch nicht ausgestattet werden können, beispielsweise weil keine Verschraubung erlaubt ist. Die erhöhte Betriebsdauer und eine gute Positionierbarkeit der Kamera 103 sind realisierbar und dabei ist keine feste Verkabelung mit dem Fahrzeug 200 notwendig, beispielsweise keine feste Verkabelung mit dem Bordnetz des Fahrzeugs 200.

Das Kamerasystem 100 ermöglicht in den verschiedenen Ausführungsbeispielen eine Vergrößerung der Anwendungsbereiche und Anwendungsmöglichkeiten für die mobile Kamera 103. Die mobile Kamera 103 kann in verschiedenen Einsatzorten benutzt werden, beispielsweise autark oder zusammen mit den Haltevorrichtungen 101, 106 und/oder der Halterung 116. Dabei ist es stets möglich, auf eine feste Verkabelung mit dem Bordnetz des Fahrzeugs 200 zu verzichten, um die Kamera 103 mit elektrischer Energie zu versorgen. Dennoch sind verschiedenste Anwendungsfälle uneingeschränkt möglich.

## Patentansprüche

1. Kamerasystem (100) für ein Fahrzeug, aufweisend:
- eine Haltevorrichtung (101), die außen an dem Fahrzeug abnehmbar befestigbar ist, und
- eine Kamera (103), die an der Haltevorrichtung (101) abnehmbar befestigbar ist, **dadurch gekennzeichnet, dass**
die Haltevorrichtung (101) einen Akkumulator (104) aufweist und dass elektrische Energie von dem Akkumulator (104) zu der Kamera (103) übertragbar ist zum Betreiben der Kamera, wobei die Kamera (103) und die Haltevorrichtung (101) im betriebsbereiten Zustand beabstandet voneinander anordenbar sind und wobei das Kamerasystem (100) eine Kabelverbindung (105) zwischen der Kamera (103) und der Haltevorrichtung (101) zum Übertragen der elektrischen Energie aufweist, so dass die Kamera (103) an einer ersten Position und die Haltevorrichtung (101) beabstandet dazu an einer zweiten Position befestigbar ist,
und wobei das Kamerasystem (100) eine weitere Haltevorrichtung (106) aufweist, die fest an dem Fahrzeug befestigbar ist und die wahlweise mit der Haltevorrichtung (101) und der Kamera (103) koppelbar ist, wobei, wenn die Haltevorrichtung (101), die zur Versorgung mit elektrischer Energie dient, und die Kamera (103) beabstandet voneinander angeordnet sind, die weitere Haltevorrichtung (106) an der ersten Position befestigbar ist, so dass die Kamera (103) mittels der weiteren Haltevorrichtung (106) an dem Fahrzeug befestigbar ist,
und wobei die Haltevorrichtung (101) und die weitere Haltevorrichtung (106) mit der Kabelverbindung (105) miteinander verbunden sind, wobei die Kabelverbindung (105) zum Übertragen elektrischer Energie von dem Akkumulator (104) der Haltevorrichtung (101) zu einer Energiesendevorrichtung (108) der weiteren Haltevorrichtung (106) dient, wobei elektrische Energie von der Energiesendevorrichtung (108) zu einer Energieempfangsvorrichtung (109) der Kamera (103) drahtlos übertragbar ist zum Betreiben der Kamera (103).

2. Kamerasystem nach Anspruch 1, bei dem die Haltevorrichtung (101) eine Energiesendevorrichtung (108) aufweist, die mit dem Akkumulator (104) elektrisch gekoppelt ist, und bei dem die Kamera (103) eine Energieempfangsvorrichtung (109) aufweist, wobei die elektrische Energie von der Energiesendevorrichtung (108) zu der Energieempfangsvorrichtung (109) drahtlos übertragbar ist.

3. Kamerasystem nach Anspruch 1 oder 2, bei dem die Haltevorrichtung (101) eine weitere Energieempfangsvorrichtung (110) aufweist, die mit dem Akkumulator (104) elektrisch gekoppelt ist, wobei elektrische Energie zu der weiteren Energieempfangsvorrichtung (110) drahtlos übertragbar ist zum Laden des Akkumulators (104).

4. Kamerasystem nach einem der Ansprüche 1 bis 3, bei dem die Kamera (103) einen weiteren Akkumulator (107) aufweist, der mittels der Haltevorrichtung (101) ladbar ist.

5. Kamerasystem nach einem der Ansprüche 1 bis 4, bei dem die Kamera (103) ausgebildet ist, in einem befestigten Zustand der Kamera (103) an der Haltevorrichtung (101) mittels drahtloser Nahfeldkommunikation von der Haltevorrichtung Positionsdaten zu empfangen, um eine relative Position der Haltevorrichtung (101) zum Fahrzeug zu bestimmen.

6. Kamerasystem nach einem der Ansprüche 1 bis 5, bei dem die Haltevorrichtung (101) mittels eines Magnets (111) an dem Fahrzeug befestigbar ist.

7. Kamerasystem nach einem der Ansprüche 1 bis 6, bei dem die Haltevorrichtung (101) einen Signalverstärker zur Vergrößerung der Reichweite eines Funkvideosignals der Kamera (103) aufweist.

8. Assistenzsystem für ein Fahrzeug, aufweisend:
- ein Kamerasystem (100) nach einem der Ansprüche 1 bis 7,
- mindestens eine weitere Kamera,
- einen Monitor (131), wobei Bilder der Kamera (103) und der weiteren Kamera kombiniert auf dem Monitor (131) darstellbar sind.

## Claims

1. Camera system (100) for a vehicle, comprising:
- a holding device (101) that can be fastened removably to the outside of the vehicle, and
- a camera (103) that can be fastened removably to the holding device (101), **characterized in that**
the holding device (101) comprises an accumulator (104) and electrical energy can be transmitted wirelessly from the accumulator (104) to the camera (103) to operate the camera, wherein the camera (103) and the holding device (101) can be arranged, when in a state ready to operate, at a distance from one another, and wherein the camera system (100) comprises a cable connection (105) between the camera (103) and the holding device (101) for transmitting the electrical energy, so that the camera (103) can be fastened at a first position and the holding device (101) can be fastened at a second position at a distance therefrom,
and wherein the camera system (100) comprises a further holding device (106) that can be fastened permanently to the vehicle and that can optionally be coupled to the holding device (101) and the camera (103), wherein, if the holding device (101), that serves to supply electrical energy, and the camera (103) are arranged at a distance from one another, the further holding device (106) can be fastened at the first position, so that the camera (103) can be fastened to the vehicle by means of the further holding device (106),
and wherein the holding device (101) and the further holding device (106) are connected to each other by the cable connection (105), wherein the cable connection (105) serves to transmit electrical energy from the accumulator (104) of the holding device (101) to an energy transmitting device (108) of the further holding device (106), wherein electrical energy can be transmitted wirelessly from the energy transmitting device (108) to an energy receiving device (109) of the camera (103) for operating the camera (103).

2. Camera system according to Claim 1, in which the holding device (101) comprises an energy transmitting device (108) that is electrically coupled to the accumulator (104), and in which the camera (103) comprises an energy receiving device (109), wherein the electrical energy can be transmitted wirelessly from the energy transmitting device (108) to the energy receiving device (109).

3. Camera system according to Claim 1 or 2, in which the holding device (101) comprises a further energy receiving device (110) that is electrically coupled to the accumulator (104), wherein electrical energy can be transmitted wirelessly to the further energy receiving device (110) for charging the accumulator (104).

4. Camera system according to one of Claims 1 to 3, in which the camera (103) comprises a further accumulator (107) that can be charged by means of the holding device (101).

5. Camera system according to one of Claims 1 to 4, in which the camera (103) is designed, when in a state in which the camera (103) is fastened to the holding device (101), to receive position data from the holding device by means of wireless near-field communication, in order to determine a relative position of the holding device (101) with respect to the vehicle.

6. Camera system according to one of Claims 1 to 5, in which the holding device (101) can be fastened to the vehicle by means of a magnet (111).

7. Camera system according to one of Claims 1 to 6, in which the holding device (101) comprises a signal amplifier for extending the range of a wireless video signal of the camera (103).

8. Assistance system for a vehicle, comprising:
- a camera system (100) according to one of Claims 1 to 7,
- at least one further camera,
- a monitor (131), wherein images from the camera (103) and the further camera can be displayed in combined form on the monitor (131).

## Revendications

1. Système de caméra (100) pour un véhicule, présentant :
- un dispositif de maintien (101) qui peut être fixé de manière amovible à l'extérieur du véhicule, et
- une caméra (103) qui peut être fixée de manière amovible au dispositif de maintien (101),
**caractérisé en ce que**
le dispositif de maintien (101) présente un accumulateur (104) et **en ce que** de l'énergie électrique peut être transférée de l'accumulateur (104) à la caméra (103) pour le fonctionnement de la caméra, la caméra (103) et le dispositif de maintien (101) pouvant être disposés à distance l'un de l'autre en état de fonctionnement, et le système de caméra (100) présentant une connexion par câble (105) entre la caméra (103) et le dispositif de maintien (101) pour transférer l'énergie électrique, de sorte que la caméra (103) peut être fixée à une première position et le dispositif de maintien (101) à distance de celle-ci, à une deuxième position,
et le système de caméra (100) présentant un autre dispositif de maintien (106) qui peut être fixé solidement au véhicule et peut être couplé au choix avec le dispositif de maintien (101) et la caméra (103), dans lequel, lorsque le dispositif de maintien (101), qui sert à l'alimentation en énergie électrique, et la caméra (103) sont disposés à distance l'un de l'autre, l'autre dispositif de maintien (106) peut être fixé à la première position, de sorte que la caméra (103) peut être fixée au véhicule au moyen de l'autre dispositif de maintien (106),
et le dispositif de maintien (101) et l'autre dispositif de maintien (106) étant reliés l'un à l'autre par la connexion par câble (105), la connexion par câble (105) servant à transférer de l'énergie électrique de l'accumulateur (104) du dispositif de maintien (101) à un dispositif d'émission d'énergie (108) de l'autre dispositif de maintien (106), de l'énergie électrique pouvant être transférée sans fil du dispositif d'émission d'énergie (108) à un dispositif de réception d'énergie (109) de la caméra (103) pour le fonctionnement de la caméra (103).

2. Système de caméra selon la revendication 1, dans lequel le dispositif de maintien (101) présente un dispositif d'émission d'énergie (108) couplé électriquement à l'accumulateur (104), et dans lequel la caméra (103) présente un dispositif de réception d'énergie (109), l'énergie électrique pouvant être transférée sans fil du dispositif de réception d'énergie (108) au dispositif de réception d'énergie (109).

3. Système de caméra selon la revendication 1 ou 2, dans lequel le dispositif de maintien (101) présente un autre dispositif de réception d'énergie (110) couplé électriquement à l'accumulateur (104), de l'énergie électrique pouvant être transférée sans fil à l'autre dispositif de réception d'énergie (110) pour charger l'accumulateur (104).

4. Système de caméra selon l'une quelconque des revendications 1 à 3, dans lequel la caméra (103) présente un autre accumulateur (107) pouvant être chargé au moyen du dispositif de maintien (101).

5. Système de caméra selon l'une quelconque des revendications 1 à 4, dans lequel la caméra (103) est conçue pour recevoir, dans un état de la caméra (103) fixée au dispositif de maintien (101), des données de position au moyen d'une communication sans fil en champ proche du dispositif de maintien afin de déterminer une position relative du dispositif de maintien (101) par rapport au véhicule.

6. Système de caméra selon l'une quelconque des revendications 1 à 5, dans lequel le dispositif de maintien (101) peut être fixé au véhicule au moyen d'un aimant (111).

7. Système de caméra selon l'une quelconque des revendications 1 à 6, dans lequel le dispositif de maintien (101) présente un amplificateur de signal pour augmenter la portée d'un signal vidéo radio de la caméra (103).

8. Système d'assistance pour un véhicule, présentant :
- un système de caméra (100) selon l'une quelconque des revendications 1 à 7,
- au moins une autre caméra,
- un moniteur (131), dans lequel les images de la caméra (103) et de l'autre caméra peuvent être représentées de manière combinée sur le moniteur (131).
